(19) Europäisches Patentamt
European Patent Office
Office européen des brevets

(11) Publication number: 0 144 175
B1

(12) # EUROPEAN PATENT SPECIFICATION

(45) Date of publication of patent specification: 28.09.88

(51) Int. Cl.$^4$: **C 08 L 67/02**, C 08 L 39/06, C 08 K 5/31, C 08 K 5/51, C 08 K 5/34, C 08 K 5/18

(21) Application number: 84307812.2

(22) Date of filing: 12.11.84

(54) **Stabilized thermoplastic elastomer compositions.**

(30) Priority: 01.12.83 US 557098
01.12.83 US 557099
01.12.83 US 577100

(43) Date of publication of application:
12.06.85 Bulletin 85/24

(45) Publication of the grant of the patent:
28.09.88 Bulletin 88/39

(84) Designated Contracting States:
AT BE CH DE FR GB IT LI LU NL SE

(56) References cited:
EP-A-0 054 308
FR-A-2 233 369
GB-A-2 109 387
US-A-2 882 255
US-A-3 856 749
US-A-4 405 749

(73) Proprietor: HOECHST CELANESE CORPORATION
Route 202-206 North
Somerville, N.J. 08876 (US)

(72) Inventor: Golder, Michael D.
38 Harreton Road
Allendale, NJ 07401 (US)
Inventor: Gromelski, Stanley J. Jr.
178 Carnoustie Road
Dover, DE 19901 (US)

(74) Representative: Ellis, John Clifford Holgate et al
MEWBURN ELLIS & CO. 2/3 Cursitor Street
London EC4A 1BQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 144 175 B1

Courier Press, Leamington Spa, England.

**Description**

Thermoplastic copolyester elastomers in which the polyester is modified with long rubbery segments have long been known in the art and are used in the preparation of molded and extruded articles. Such resins can be used alone or in conjunction with fillers or other resins to provide materials having a variety of properties. It is well known, however, that materials of this general type are subject to thermal degradation. US—A—3,023,192, 3,651,014, 3,766,146, 3,784,520 and 3,763,109 are among prior patents describing elastomers of this type.

Unstabilized elastomers of the type described above exhibit poor processing behavior and unacceptable performance, especially at elevated temperatures. While a number of antioxidant stabilizers are available for use in polymers, many are unsuitable for use in copolyester elastomers of the type mentioned above because of the severe time-temperature conditions involved in the manufacture and/or use of such elastomers. When used in elastomers of this type, most available stabilizers either inhibit polymer formation or result in production of a non-white colored product. Additionally most available stabilizers do not provide adequate long term retention of desirable mechanical and thermal properties. US—A—4,355,155 and 4,405,749 describe elastomer of the general type described above but which is modified to provide improved thermal stability together with a desirable white color.

It is an object of the present invention to provide thermoplastic copolyester elastomers of the general type described above, but with improved thermal stability, particularly at elevated use temperatures. In accordance with the invention, a thermoplastic elastomer composition is provided which consists essentially of:

a) segmented thermoplastic copolyester elastomer consisting essentially of a multiplicity of recurring long chain ester units and short chain ester units joined head to tail through ester linkages, said long chain units being represented by the formula

$$-OGO-\overset{\overset{O}{\|}}{C}R\overset{\overset{O}{\|}}{C}- \qquad \text{Formula I}$$

and said short chain units being represented by the formula

$$-ODO-\overset{\overset{O}{\|}}{C}R\overset{\overset{O}{\|}}{C}- \qquad \text{Formula II}$$

where G is a divalent polyether radical, such as that remaining after the reaction of the terminal hydroxyl groups of a difunctional polyether glycol, having a number average molecular weight in the range from 400 to 6,000, R is a hydrocarbon radical remaining after removal of the carboxylic groups from terephthalic acid or isophthalic acid, and D is a divalent radical derived from 1,4-butanediol or 1,4-butenediol; provided, said short chain units amount to between 30% and 85% by weight of the copolyester; and

b) between 0.1 and 25% by weight of said copolyester of polyvinylpyrrolidone.

In preferred embodiments compositions of the invention also include:

a) between 0.05 and 5% by weight of said copolyester of cyanoguanidine or guanidine stabilizer of the general formula III

$$\underset{\overset{|}{CN}}{NH}-\overset{\overset{NH}{\|}}{C}-NH\!\left(CH_2\right)_n NH-\overset{\overset{NH}{\|}}{C}-\underset{\overset{|}{CN}}{NH} \qquad \text{III}$$

where n is an integer between 2 and 20, preferably 5 or 6;

b) between 0.1 and 5% by weight of said copolyester of diphenylamine derivative of the general formual IV

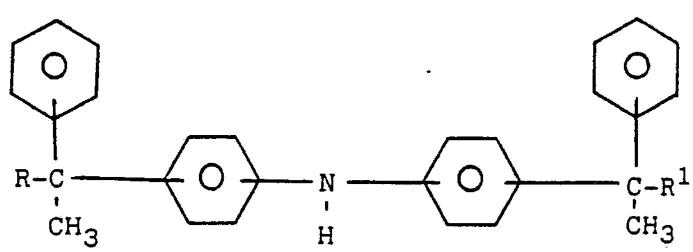

IV

where R and $R^1$ are methyl or phenyl; and

c) between 0.05 and 3% by weight of said copolyester of phosphorus compound of one or more of the formulas V to VIII

i) 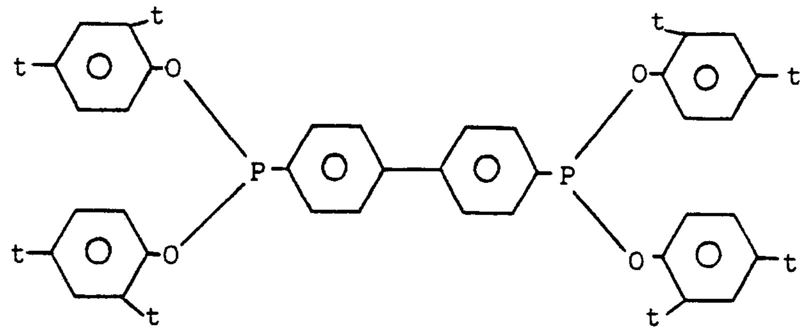 V

where t represents a tertiary butyl radical,

ii) 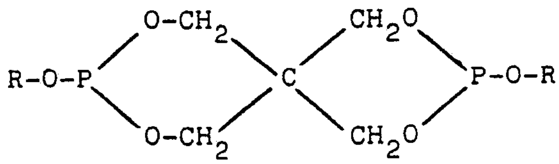 VI

where R represents an alkyl radical having from 6 to 22 carbon atoms or a hydrocarbon radical of the structure

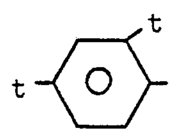

where t represents a tertiary butyl radical or

iii) 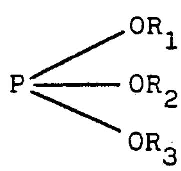 VII

where each of R and $R_1$ independently represents a hydrocarbon radical selected from the group consisting of alkyl, aryl and alkyl/aryl hydrocarbon radicals having from 1 to 22 carbon atoms and $R_3$ represents hydrogen or a hydrocarbon radical selected from the group consisting of alkyl, aryl and alkyl/aryl hydrocarbon radicals having from 1 to 22 carbon atoms.

In further preferred embodiments of the invention, at least 80% of the R groups of formulas I and II are hydrocarbon radicals remaining after removal of carboxyl groups from terephthalic acid, between 10 and 40%, more usually between 20 and 30%, of the D groups of Formula II represent divalent radicals remaining after removal of hydroxyl groups from 1,4-butenediol and short chain units amount to between 40% and 65% by weight of the copolyester.

The long chain ester units of the product of the invention are the reaction product of a long chain glycol with terephthalic acid or isophthalic acid. The long chain glycols are poly(alkylene oxide) glycols having terminal (or as nearly terminal as possible) hydroxyl groups and hydroxyl numbers between about 18 and about 280 as determined in accordance with ASTM test method E—222. Corresponding number average molecular weights are between 400 and 6,000. Number average molecular weight for a particular glycol may be calculated by dividing the hydroxyl number into 112,200. Glycols used in the invention preferably have a number average molecular weight between 400 and 6,000 as carbon to oxygen ratio of between 2.0 to 1 and 4.3 to 1. Representative long chain glycols available for use in making product of the invention include poly(ethylene oxide) glycol, poly(1,2- and 1,3-propylene oxide) glycol, and poly(tetramethylene oxide) glycol. Poly(tetramethylene oxide) glycol is a particularly preferred glycol for long chain ester units of the invention.

Short chain units of product of the invention may be made by reacting 1,4-butanediol, 1,4-butenediol or a mixture thereof with terephthalic acid or isophthalic acid. In preferred embodiments 1,4-butenediol is used in amounts between 10 and 40%, more usually between 20 and 30%, based on the total of 1,4-butanediol and 1,4-butenediol. In making both the long chain and short chain units of product of the invention, the use of terephthalic acid is generally preferred with the use of between about 1 and about

20% isophthalic acid based on the total of terephthalic acid and isophthalic acid used being preferred when product of lower flexural modulus is desired.

The terms "terephthalic acid" and "isophthalic acid" as used herein are intended to include the condensation polymerization equivalent of such acids, i.e. their esters or ester-forming derivatives such as acid chlorides and anhydrides, or other derivatives which behave substantially like such acids in a polymerization reaction with a glycol. Dimethyl terephthalate and dimethyl isophthalate are for instance suitable starting materials for elastomers of the invention.

Copolyester elastomer for use in the invention can be made by conventional ester interchange reaction. A preferred procedure involves heating the dimethyl ester of terephthalic acid or of a mixture of terephthalic and isophthalic acids with a long chain glycol and a molar excess of a mixture of butanediol and butenediol in the presence of a catalyst at 150—260°C followed by distilling off of methanol formed by the interchange. Heating is continued until methanol evolution is complete. Depending upon temperature, catalyst and glycol excess, the polymerization is complete within a few minutes to a few hours. This procedure results in the preparation of a low molecular weight pre-polymer which can be carried to a desired high molecular weight copolyester by distillation of the excess of short chain diol in a conventional polycondensation reaction. Additional ester interchange occurs during this distillation to increase the molecular weight and to randomize the arrangement of the copolyester units. Best results are usually obtained if this final distillation or polycondensation is run at less than 1 mm pressure and 220—255°C for less than 2 hours in the presence of antioxidants. Most practical polymerization techniques rely upon ester interchange to complete the polymerization reaction. In order to avoid excessive hold time at high temperatures with possible irreversible thermal degradation, it is advantageous to employ a catalyst for ester interchange reactions. While a wide variety of catalysts can be used, organic titanates such as tetrabutyl or tetraisopropyl titanate used alone or in combination with magnesium or calcium acetates are preferred. Complex titanates, such as derived from alkali or alkaline earth metal alkoxides and titanate esters are also very effective. Inorganic titanates, such as lanthanum titanate, calcium acetate/antimony trioxide mixtures and lithium and magnesium alkoxides are representative of other catalysts which can be used.

Prepolymers for product of the invention can also be prepared by a number of alternate esterification or ester interchange processes. For example, the long chain glycol can be reacted with a high or low molecular weight short chain ester homopolymer or copolymer in the presence of catalyst until randomization occurs. The short chain ester homopolymer or copolymer can be prepared by ester interchange from either the dimethyl esters and low molecular weight diols, as above, or from the free acids with the diol acetates. Alternatively, the short chain ester copolymer can be prepared by direct esterification from appropriate acids, anhydrides or acid chlorides, for example, with diols or by other processes such as reaction of the acids with cyclic ethers or carbonates. Obviously the prepolymer might also be prepared by running these processes in the presence of the long chain glycol.

Ester interchange polymerizations are generally run in the melt without added solvent, but inert solvents can be used to facilitate removal of volatile components from the mass at low temperatures. This technique is especially valuable during prepolymer preparation, for example, by direct esterification. However, certain low molecular weight diols, for example, butanediol in terphenyl, are conveniently removed during high polymerization by azeotropic distillation. Other special polymerization techniques, for example, interfacial polymerization of bisphenol with bisacylhalides and bisacylhalide capped linear diols, may prove useful for preparation of specific polymers. Both batch and continuous methods can be used for any stage of copolyester polymer preparation. Polycondensation of prepolymer can also be accomplished in the solid phase by heating finely divided solid prepolymer in a vacuum or in a stream of inert gas to remove liberated low molecular weight diol. This method has the advantage of reducing degradation because it must be used at temperatures below the softening point of the prepolymer. The major disadvantage is the long time required to reach a given degree of polymerization.

Molecular weight of elastomer used in product of the invention may vary widely depending upon end use requirements. For elastomer used in product of the invention melt flow rate (MFR) is usually used as an indication of molecular weight. The actual molecular weight of the elastomer is not usually determined. For typical uses of product of the invention such as extrusion or molding operations elastomer used frequently has an MFR between about 0.1 and about 50 grams/10 minutes (220°C, 2160 g) as determined in accordance with ASTM test method D—1238 although elastomer of greater MFR such as up to about 350 or more may be produced if desired.

Elastomer composition of the invention contains between 0.1 and 25 weight percent (wt %) polyvinylpyrrolidone (PVP) based on copolyester, preferably between 0.5 and 15 wt % on the same basis. While molecular weight of PVP used in the invention is not critical as long as the PVP does not produce discrete particles in the blend, use of PVP having a K value not exceeding about 30 is preferred. PVP having a K value between about 0.5 and about 20 is especially preferred. K values mentioned herein are as determined by the Fikentscher equation (Kline, G. M., "Polyvinylpyrrolidone", Modern Plastics, Nov., 1945).

Use of the guanidine type stabilisers improves long term thermal stability of the elastomer. Use of cyanoguanidine or stabilizer of Formula III in which n is 6, i.e. 1,6 Hexamethylene-bis-dicyandiamide (HMBD) is especially preferred.

Addition of the ingredients according to claims 3 to 5 provides further unexpected improvement in thermal stability of elastomer of the invention.

Phosphorous compounds of Formula VI suitable for use in the invention include for instance

distearyl pentaerythritol diphosphite
dioctyl pentaerythritol diphosphite
diisodecyl pentaerythritol diphosphite
dimyristyl pentaerythritol diphosphite
bis(2,4 di-t-butyl phenyl) pentaerythritol diphosphite

Of these the use of distearyl pentaerythritol diphosphite or bis(2,4 di-t-butyl phenyl) pentaerythritol diphosphite is preferred.

Suitable phosphorous compounds of Formula VII for use in the invention include for instance:

tris (nonyl phenyl) phosphite
tris (butyl phenyl) phosphite
trimethyl phosphite
triethyl phosphite
tris (2 ethylhexyl) phosphite
triisopropyl phosphite
triisoctyl phosphite
distearyl phosphite
triisodecyl phosphite
triisoctyl phosphite
diisoctyl phosphite
trilauryl phosphite
tristearyl phosphite
diphenyl phosphite
triphenyl phosphite
diphenyl isodecyl phosphite
diphenyl isooctyl phosphite
phenyl isodecyl phosphite
dilauryl phosphite
di-tridecyl phosphite
ethylhexyl diphenyl phosphite
diisoctyl octylphenyl phosphite
phenyl diisodecyl phosphite

Of these, use of tris (nonyl phenyl) phosphite or phenyl diisodecyl phosphite is frequently preferred.

Small amounts of antioxidant stabilizer, such as between about 0.1 and about 5 wt % based on copolyester, are preferably included with the ingredients used in making copolyester for use in the invention. It is preferred that at least this small amount of antioxidant be present during polymerization of the copolyester in order to prevent excessive oxidation. Antioxidant consisting of 3,4-di-tert-butyl-4-hydroxy-hydrocinnamic acid triester with 1,3,5-tris-(2-hydroxy ethyl-s-triazine-2,4,6-(1H, 3H, 5H) trione is preferred but other suitable stabilizers may be used.

Compositions of the invention may include additional conventional ingredients such as UV absorbers, e.g. benzophenones or benzotriazoles. The properties of these compositions can also be modified by incorporation of various conventional inorganic fillers such as carbon black, silica gel, alumina, clays and chopped fiberglass. In general, these additives have the effect of increasing the modulus of the material at various elongations. Compounds having a range of hardness values can be obtained by blending hard and soft copolyesters of the invention. The copolyesters can also be compounded with other resins such as polyvinyl chloride or polybutylene terephthalate. Suitable flame retardant additives may also be used.

As mentioned above, at least small amounts of antioxidant are preferably used during polymerization of copolyester of the invention. Other essential and optional ingredients of compositions of the invention are preferably added by blending with previously polymerized copolyester. All such ingredients or portions thereof may, however, be present during polymerization of the copolyester so long as the polymerization reaction is not interfered with. Blending with copolyester may be carried out in any suitable manner such as in conventional mixing equipment with extrusion compounding being preferred.

Elastomers of the invention exhibit superior retention of mechanical properties, especially tensile strength, and improved brittleness characteristics at elevated temperatures. Such elastomers are especially suited for use in molding various articles such as tires, hoses, drive belts, gears, etc. Such elastomers can be made in grades of low melt flow rate. This permits faster molding cycle times and allows the manufacture of blow molding grades of elastomers of the invention.

Both cyanoguanidine (CNG) and guanidine stabilizers of formula III are quite effective for stabilizing elastomer of the type used in the invention. CNG will, however, plate out onto extrusion processing equipment. This results in extruded parts which have dull surfaces. Guanidine stabilizers of formula III tend to bloom, resulting in dull, greasy appearing surfaces on finished products. Use of PVP along with CNG or stabilizer of formula III in compositions of the invention substantially eliminates such plate-out or blooming and resulting dull surfaces on extruded products. It has further been found that PVP alone has a significant

stabilizing influence on elastomers of the type described herein. Stability of elastomers of this type containing PVP or PVP plus guanidine is further improved by the use of diphenylamine and phosphorous stabilizer as described herein.

## Examples

The following examples are intended to illustrate the invention without limiting the scope thereof. In the work presented herein, the following terms have the meanings given below.

DMT — dimethyl terephthalate
$B_1D$ — 1,4-butanediol
$B_2D$ — 1,4-butenediol
Poly(THF) — poly(tetramethylene oxide) glycol of number average molecular weight 1,000
TPT — tetra isopropyl titanate
Goodrite® 3125 — trade name for 3,5-di-tert-butyl-4-hydroxyhydrocinnamic acid triester with 1,3,5-tris-(2-hydroxyethyl)-s-triazine-2,4,6-(1H, 3H, 5H) trione
Naugard® 445 — trade name for α,α-dimethylbenzyl diphenyl amine (formula IV)
GT — weight percent of short chain ester units of formula II in elastomer of the invention
HMBD — 1,6 Hexamethylene-bis-dicyandiamide
Sandostab® P—EPQ — trade name for phosphonite of formula V
PVP — K—15 polyvinylpyrrolidone
CNG — cyanoguanidine
Weston® 618 — trade name for distearyl pentaerythritol diphosphite

Elastomer used in making the elastomer compositions referred to in the examples was commercially available elastomer (GAF Gaflex® 555) having a melt flow rate of about 12 grams per 10 minutes (220°C, 2160 g) and a GT of 62. 25% of the D groups of formula II were derived from 1,4-butenediol with the remaining 75% being derived from 1,4-butanediol. This elastomer was made from the following ingredients:

| Ingredient | Mols | Grams |
|---|---|---|
| DMT | 6.13 | 1189 |
| $B_1D$ | 4.98 | 448 |
| $B_2D$ | 2.34 | 206 |
| Poly (THF) | 0.65 | 650 |
| Goodrite® 3125 | | 35 |
| TPT | | 1.3 |

The elastomer described immediately above was pelleted and tumble blended with various additional ingredients as indicated in Table I below to form elastomer compositions to be tested for plate-out, gloss and hot air aging properties. Each blend tested for hot air aging was then extruded into sheets using a one inch (25,4 mm) extruder equipped with a mixing screw and operated at a temperature of 200°C. ASTM D—412 test specimens were then made of each composition by die cutting. Test specimens were placed in a hot air convection oven at 140°C and were tested initially and after one, two or three weeks in accordance with ASTM D—412.

Plate-out was evaluated by visual observation of extrusion equipment.

Gloss was evaluated by use of a Gardner Glossgard instrument for measuring 75° and 60° gloss.

## Example 1

In order to demonstrate the effectiveness of PVP as a stabilizer in elastomer compositions of the invention, elastomer compositions as described in Table I were formulated and tested in accordance with ASTM D—412 with the results shown in Table I.

TABLE I

| Composition No. | 1* | 2 | 3 | 4 |
|---|---|---|---|---|
| Ingredients (wt%) | GAFLEX® 555 | GAFLEX® 555 + 4% PVP | GAFLEX® 555 + 10% PVP | GAFLEX® 555 + 15% PVP |
| % Retention — 1 wk at 140°C | | | | |
| Ultimate Tensile Strength | 75 | 79 | 87 | 97 |
| Elongation | 11 | 40 | 26 | 20 |
| % Retention — 2 wk at 140°C | | | | |
| Ultimate Tensile Strength | 14 | 76 | 81 | 100 |
| Elongation | 0 | 24 | 15 | 11 |

*control

Example 2

In order to demonstrate the ability of PVP to control plate-out and gloss problems resulting from the use of CNG stabilizer, elastomer compositions were formulated and tested for plate-out and gloss with the results shown in Table II.

TABLE II

| Composition No. | Ingredients (wt %) | Plate-Out On Calendar Rolls | 75° Gloss |
|---|---|---|---|
| 5* | Gaflex® 555 (1) | None | 95% |
| 6 | 1 + 0.3% CNG | Heavy | 5—35% |
| 7 | 1 + 1.5% PVP + 0.3% CNG | None | 95% |
| 8 | 1 + 4.0% PVP + 0.3% CNG | None | 95% |
| 9 | 1 + 0.2% CNG | Slight | 30—80% |
| 10 | 1 + 2.0% PVP + 0.2% CNG | None | 95% |
| 11 | 1 + 1.5% PVP + 0.375% CNG | Very Slight | 90—95% |
| 12 | 1 + 1.5% PVP + 0.35% CNG | None | 95% |

*control

Example 3

In order to show the effectiveness of PVP in conjunction with other stabilizers in stabilizing elastomer compositions of the invention, elastomer compositions were formulated and tested with the results shown in Table III.

TABLE III

Hot Air Aging At 140°C

| | | % Retention After 3 Weeks | |
|---|---|---|---|
| Composition No. | Ingredients (wt %) | Ultimate Tensile Strength | Elongation |
| 13** | Gaflex® 555 (1) | 19.5% | 0 |
| 14** | 1 + 11* | 63% | 68% |
| 15 | 1 + 11 + 0.75% PVP | 63% | 66% |
| 16 | 1 + 11 + 2.0% PVP | 67% | 59% |
| 17 | 1 + 11 + 4.0% PVP | 73% | 30% |

*11 = 0.3% CNG + 1.5% Naugard® 445 + 0.5% Sandostab® P—EPQ
**control

Example 4

In order to show the ability of PVP to control gloss and surface appearance problems caused by blooming of HMBD stabilizer, elastomer compositions were formulated and tested as shown in Table IV.

TABLE IV

| Sample | Surface Appearance | 60° Gloss |
|---|---|---|
| 18* — Gaflex® 555 + 1.5% Naugard® 445 + 0.5% Sandostab® P—EPQ + 0.5% HMBD | dull, greasy | 79% |
| 19 — Gaflex® 555 + 1.5% Naugard® 445 + 0.5% Sandostab® P—EPQ + 0.65% HMBD + 1.5% K—15, PVP | glossy | 95% |
| 20* — Gaflex® 555 | glossy | 95% |

*control

Example 5

Additional compositions of the invention may be formulated using the ingredients shown in Table V.

TABLE V

| Composition No. | Ingredients | Amount (wt% based on resin) |
|---|---|---|
| 21 | Gaflex® 555<br>1,3 trimethylene-bis-dicyandiamide<br>Sandostab® P—EPQ<br>Naugard® 445<br>PVP | 91<br>1<br>3<br>4<br>1 |
| 22 | Gaflex® 555<br>1,10 decylmethylene-bis-dicyandiamide<br>Sandostab® P—EPQ<br>Naugard® 445<br>PVP | 93.5<br>2.5<br>2.0<br>0.5<br>1.5 |
| 23 | Gaflex® 555<br>1,16 hexadecylmethylene-bis-dicyandiamide<br>Sandostab® P—EPQ<br>methylphenyl benzyl diphenyl amine (formula IV)<br>PVP | 89<br>4.5<br>1.5<br>1.5<br>3.5 |
| 24 | Gaflex® 555<br>1,6 hexamethylene-bis-dicyandiamide<br>Naugard® 445<br>Sandostab® P—EPQ<br>PVP | 96.8<br>0.5<br>1.5<br>0.5<br>0.7 |
| 25 | Gaflex® 555<br>PVP | 98<br>2 |

Example 6

The elastomer described above was pelleted and tumble blended with various additional ingredients as indicated in Table VI below to form elastomer compositions. Each blend was then extruded into sheets using a one inch (25,4 mm) extruder equipped with a mixing screw and operated at a temperature of 200°C. ASTM D—412 test specimens were then made of each composition by die cutting. Test specimens were placed in a hot air convection oven at 145°C and were tested initially and after two weeks in accordance with ASTM D—412. Percent elongation for each composition is reported in Table VI below.

TABLE VI

| Composition | Additional Ingredients | Amount (wt%) | % retention of elongation after 2 weeks (145°C) |
|---|---|---|---|
| 26 | none (control) | | 11.5 |
| 27 | PVP | 4.0 | 48 |
| | CNG | 0.35 | |
| | Naugard® 445 | 1.5 | |
| | Weston® 618 | 0.5 | |
| 28 | PVP | 1.5 | 100 |
| | CNG | 0.35 | |
| | Naugard® 445 | 1.5 | |
| | Weston® 618 | 0.5 | |

Example 7

The elastomer described above may be pelleted and tumble blended with various additional ingredients as indicated in Table VII below to form elastomer compositions of the invention. Such compositions may then be extruded or molded to form desired end products.

TABLE VII

| Composition | Additional Ingredients | Amount (wt% based on resin) |
|---|---|---|
| 29 | 1,3 trimethylene-bis-dicyandiamide | 1 |
| | Distearyl pentaerythritol diphosphite | 3 |
| | Naugard® 445 | 4 |
| | PVP | 1 |
| 30 | 1,10 decylmethylene-bis-dicyandiamide | 2.5 |
| | bis(2,4 di-t-butyl phenyl) pentaerythritol diphosphite | 2.0 |
| | Naugard® 445 | 0.5 |
| | PVP | 5.0 |
| 31 | 1,16 hexadecylmethylene-bis-dicyandiamide | 4.5 |
| | Dioctyl pentaerythritol diphosphite | 1.5 |
| | methylphenyl benzyl diphenyl amine | 1.5 |
| | PVP | 10.0 |
| 32 | 1,5 pentamethylene-bis-dicyandiamide | 0.5 |
| | Naugard® 445 | 1.5 |
| | Diisodecyl pentaerythritol diphosphite | 0.5 |
| | PVP | 15.0 |
| 33 | HMBD | 0.35 |
| | Naugard® 445 | 1.5 |
| | Distearyl pentaerythritol diphosphite | 0.05 |
| | PVP | 20.0 |
| 34 | HMBD | 3.0 |
| | Naugard® 445 | 3.0 |
| | Dimyristyl pentaerythritol diphosphite | 2.5 |
| | PVP | 25.0 |

Example 8

The elastomer described above may be pelleted and tumble blended with various additional ingredients as indicated in Table VIII below to form elastomer compositions of the invention. Such compositions may then be extruded or molded to form desired end products.

TABLE VIII

| Composition | Additional Ingredients | Amount (wt% based on resin) |
|---|---|---|
| 35 | 1,3 trimethylene-bis-dicyandiamide | 1 |
| | Naugard® 445 | 4 |
| | Diphenyl isodecyl phosphite | 3 |
| | PVP | 1 |
| 36 | 1,10 decylmethylene-bis-dicyandiamide | 2.5 |
| | Naugard® 445 | 0.5 |
| | Ethylhexyl diphenyl phosphite | 2.0 |
| | PVP | 5.0 |
| 37 | 1,16 hexadecylmethylene-bis-dicyandiamide | 4.5 |
| | methylphenyl benzyl diphenyl amine | 1.5 |
| | Distearyl phosphite | 1.5 |
| | PVP | 10.0 |
| 38 | 1,5 pentamethylene-bis-dicyandiamide | 0.5 |
| | Naugard® 445 | 1.5 |
| | Triethyl phosphite | 1.5 |
| | PVP | 15.0 |
| 39 | HMBD | 0.35 |
| | Naugard® 445 | 1.5 |
| | Tris(nonylphenyl) phosphite | 0.5 |
| | PVP | 20.0 |

Example 9

Elastomer compositions may also be formulated which are similar to those mentioned above but which use elastomers in which R groups of Formulas I and II are hydrocarbon radicals remaining after removal of carboxyl groups from terephthalic acid, D groups of formula II are divalent radicals remaining after removal of carboxyl groups from 1,4-butanediol and G of formula I is a divalent radical remaining after removal of terminal hydroxyl groups from poly(tetramethylene oxide) glycol. Such elastomers are available for example from E. I. duPont de Nemours and Company in several GT grades under the tradename Hytrel®.

**Claims**

1. Thermoplastic elastomer composition consisting essentially of:

a) segmented thermoplastic copolyester elastomer consisting essentially of a multiplicity of recurring long chain ester units and short chain ester units joined head to tail through ester linkages, said long chain units being represented by the formula

$$-OGO-\overset{\overset{O}{\|}}{C}R\overset{\overset{O}{\|}}{C}- \qquad \text{Formula I}$$

and said short chain units being represented by the formula

$$-ODO-\overset{\overset{O}{\|}}{C}R\overset{\overset{O}{\|}}{C}- \qquad \text{Formula II}$$

where G is a divalent radical remaining after the removal of the terminal hydroxyl groups from a difunctional polyether glycol, having a number average molecular weight in the range from 400 to 6,000, R is a hydrocarbon radical remaining after removal of the carboxyl groups from terephthalic acid or isophthalic acid, and D is a divalent radical remaining after removal of hydroxyl groups frrom 1,4-butanediol or 1,4-butenediol; provided, said short chain units amount to between 30% and 85% by weight of the copolyester; and

b) between 0.1 and 25% by weight of said copolyester of polyvinylpyrrolidone.

2. Elastomer according to Claim 1 wherein between 10% and 40% of the D groups represent divalent radicals remaining after removal of hydroxyl groups from 1,4-butenediol.

3. Elastomer composition according to either of Claims 1 or 2 which also includes between 0.05 and 5% by weight of said copolyester of cyanoguanidine or guanidine stabilizer of the general formula III

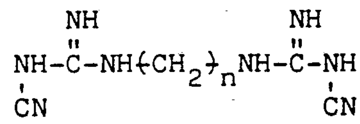

III

where n is an integer between 2 and 20.

4. Elastomer composition according to Claim 3 wherein the guanidine stabilizer is cyanoguanidine.

5. Elastomer composition according to any of Claims 1—4 which also includes:

a) between 0.1 and 5% by weight of said copolyester of diphenylamine derivative of the general formula IV

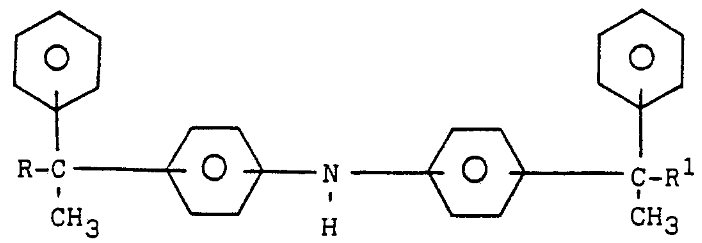

IV

where R and $R^1$ are methyl or phenyl; and

b) between 0.05 and 3% by weight of said copolyester of phosphorus compound of one or more of the formulas V to VII

i)

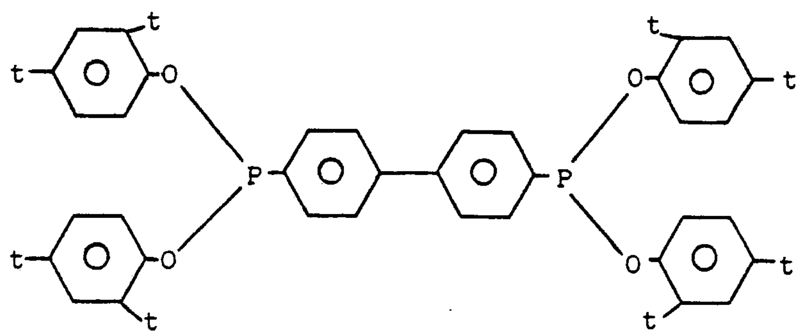

V

where t represents a tertiary butyl radical,

ii)

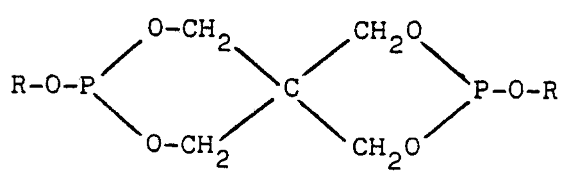

VI

where R represents an alkyl radical having from 6 to 22 carbon atoms or a hydrocarbon radical of the structure

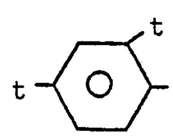

where t represents a tertiary butyl radical or

iii)

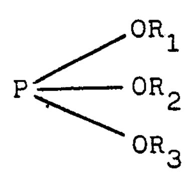

VII

where each of R and $R_1$ independently represents a hydrocarbon radical selected from the group consisting

of alkyl, aryl and alkyl/aryl hydrocarbon radicals having from 1 to 22 carbon atoms and $R_3$ represents hydrogen or a hydrocarbon radical selected from the group consisting of alkyl, aryl and alkyl/aryl hydrocarbon radicals having from 1 to 22 carbon atoms.

6. Elastomer according to any of Claims 1 or 3—5 wherein the D groups represent divalent radicals remaining after removal of hydroxyl groups from 1,4-butanediol.

7. Elastomer composition according to any of Claims 1—6 wherein G is a divalent radical remaining after removal of terminal hydroxy groups from a difunctional polyether glycol having a carbon to oxygen ratio between 2.5 and 4.3 to 1.

8. Elastomer composition according to any of Claims 1—7 wherein at least 80% of the R groups of formulas I and II are hydrocarbon radicals remaining after removal of carboxyl groups from terephthalic acid.

9. Elastomer composition according to any of Claims 1—8 wherein the short chain units amount to between 40 and 65% by weight of the copolyester.

10. Elastomer composition according to any of Claims 1—9 wherein between 20 and 30% of the D groups represent divalent radicals remaining after removal of hydroxyl groups from 1,4-butenediol.

11. Elastomer composition according to any of Claims 1—10 wherein G is a divalent radical remaining after removal of terminal hydroxy groups from poly(tetramethylene oxide) glycol.

12. Elastomer composition according to any of Claims 1—11 which also includes between 0.1% and 5% by weight of said copolyester of 3,5-di-tert-butyl-4-hydroxyhydrocinnamic acid triester with 1,3,5-tris(2-hydroxyethyl)-s-triazine-2,4,6-(1H, 3H, 5H) trione.

13. Elastomer composition according to any of Claims 1—12 wherein polyvinylpyrrolidone is present in an amount between 0.5 and 15 wt% based on copolyester.

14. Elastomer composition according to any of Claims 1—13 wherein the guanidine stabilizer is 1,6 hexamethylene-bis-dicyandiamide.

**Patentansprüche**

1. Thermoplastische Elastomerzusammensetzung, im wesentlichen bestehend aus:

a) segmentiertem, thermoplastischem Copolyester-Elastomer bestehend im wesentlichen aus einer Vielzahl von periodisch wiederkehrenden langkettigen Estereinheiten und kurzkettigen Estereinheiten, die Kopf an Schwanz durch Esterbindungen gebunden sind, wobei die genannten langkettigen Einheiten die Formel

$$-OGO-\overset{\overset{O}{\|}}{C}R\overset{\overset{O}{\|}}{C}- \qquad \mathrm{I}$$

aufweisen und die genannten kurzkettigen Einheiten die Formel

$$-ODO-\overset{\overset{O}{\|}}{C}R\overset{\overset{O}{\|}}{C}- \qquad \mathrm{II}$$

aufweisen, worin G ein zweiwertiger Rest ist, der nach der Entfernung der endständigen Hydroxylgruppen aus einem zweiwertigen Polyätherglykol mit einem zahlenmäßig durchschnittlichen Molekulargewicht im Bereich von 400 bis 6000 zurückbleibt, R für einen Kohlenwasserstoffrest steht, der nach der Entfernung der Carboxylgruppen aus Terephthalsäure oder Isophthalsäure zurückbleibt und D einen zweiwertigen Rest darstellt, der nach der Entfernung von Hydroxylgruppen aus 1,4-Butandiol oder 1,4-Butendiol zurückbleibt; mit der Maßgabe, daß die kurzkettigen Einheiten zwischen 30 und 85 Gew.-% des Copolyesters ausmachen; und

b) zwischen 0,1 und 25 Gew.-% des genannten Copolyesters an Polyvinylpyrrolidon.

2. Elastomer nach Anspruch 1, worin zwischen 10 und 40 Gew.-% der D-Gruppen zweiwertige Reste darstellen, die nach der Entfernung von Hydroxylgruppen aus 1,4-Butendiol zurückbleiben.

3. Elastomerzusammensetzung nach Anspruch 1 oder 2, die weiters zwischen 0,05 und 5 Gew.-% des genannten Copolyesters von Cyanoguanidin oder Guanidinstabilisator der allgemeinen Formel III

$$\underset{\underset{CN}{|}}{NH}-\overset{\overset{NH}{\|}}{C}-NH\!\left(CH_2\right)_n\!NH-\overset{\overset{NH}{\|}}{C}-\underset{\underset{CN}{|}}{NH} \qquad \mathrm{III}$$

enthält, worin n eine ganze Zahl zwischen 2 und 20 ist.

4. Elastomerzusammensetzung nach Anspruch 3, worin der Guanidinstabilisator Cyanoguanidin ist.

5. Elastomerzusammensetzung nach einem der Ansprüche 1 bis 4, weiters umfassend:

a) zwischen 0,1 und 5 Gew.-% des genannten Copolyesters am Diphenylaminderivat der allgemeinen Formel IV

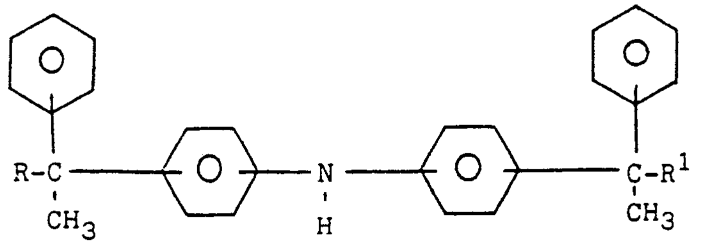

IV

worin R und R' für Methyl oder Phenyl stehen; und

b) zwischen 0,05 und 3-Gew.-% des genannten Copolyesters an Phosphorverbindung nach einer oder mehreren der Formel V bis VII

i)

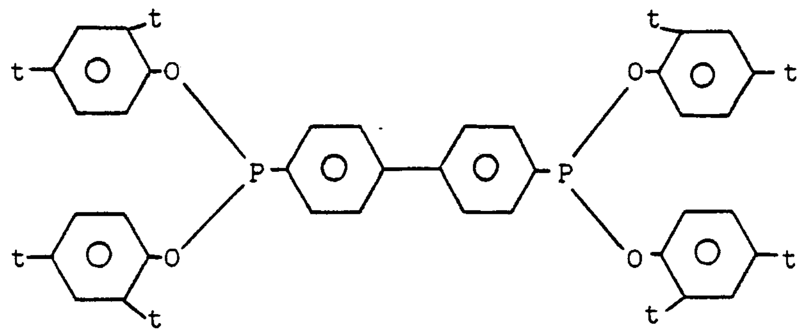

V

worin t einen tert. Butylrest bedeutet,

ii)

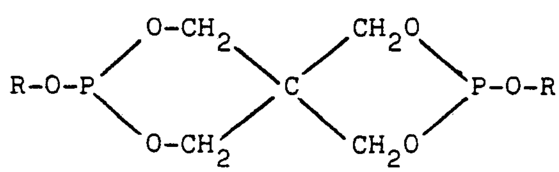

VI

worin R einen Alkylrest mit 6 bis 22 C-Atomen oder einen Kohlenwasserstoffrest der Struktur

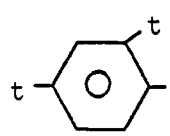

worin t ein tert. Butylrest ist oder

iii)

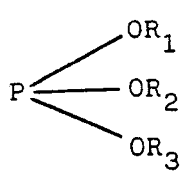

VII

worin $R_1$ und $R_2$ unabhängig einen Kohlenwasserstoffrest bedeuten, der aus der Gruppe gewählt ist, die aus Alkyl-, Aryl- und Alkyl-Aryl-Kohlenwasserstoffresten mit 1 bis 22 C-Atomen besteht, und $R_3$ Wasserstoff oder einen Kohlenwasserstoffrest darstellt, der aus der Gruppe gewählt ist, die aus Alkyl-, Aryl- und Alkyl/Aryl-Kohlenwasserstoffresten mit 1 bis 22 Kohlenwasserstoffresten besteht.

6. Elastomer nach einem der Ansprüche 1 oder 3 bis 5, vorin die D-Gruppen zweiwertige Reste bedeuten, die nach der Entfernung von Hydroxylgruppen aus 1,4-Butandiol zurückbleiben.

7. Elastomerzusammensetzung nach einem der Ansprüche 1 bis 6, worin G ein zweiwertiger Rest ist, der nach der Entfernung von endständigen Hydroxylgruppen aus einem zweiwertigen Polyätherglykol mit einem Verhältnis von Kohlenstoff zu Sauerstoff zwischen 2,5 und 4,3 zu 1 zurückbleibt.

8. Elastomerzusammensetzung nach einem der Ansprüche 1 bis 7, worin wenigstens 80% der R-Gruppen in den Formeln I und II Kohlenwasserstoffreste sind, die nach der Entfernung von Carboxylgruppen aus Terephthalsäure zurückbleiben.

9. Elastomerzusammensetzung nach einem der Ansprüche 1 bis 8, worin die kurzkettigen Einheiten zwischen 40 und 65 Gew.-% des Copolyesters ausmachen.

10. Elastomerzusammensetzung nach einem der Ansprüche 1 bis 9, worin zwischen 20 und 30% der D-Gruppen zweiwertige Reste darstellen, die nach der Entfernung von Hydroxylgruppen aus 1,4-Butendiol zurückbleiben.

11. Elastomerzusammensetzung nach einem der Ansprüche 1 bis 10, worin G ein zweiwertiger Rest ist, der nach der Entfernung von endständigen Hydroxylgruppen aus Poly(tetramethylenoxid)glykol zurückbleibt.

12. Elastomerzusammensetzung nach einem der Ansprüche 1 bis 11, die weiters zwischen 0,1 und 5 Gew.-% des genannten Copolyesters an 3,5-di-tert.-Butyl-4-hydroxyhydrozimtsäuretriester mit 1,3,5-Tris-(2-hydroxyäthyl)-s-triazin-2,4,6-(1H,3H,5H)trion enthält.

13. Elastomerzusammensetzung nach einem der Ansprüche 1 bis 12, worin Polyvinylpyrrolidon in einer Menge zwischen 0,5 und 15 Gew.-% bezogen auf den Copolyester anwesend ist.

14. Elastomerzusammensetzung nach einem der Ansprüche 1 bis 13, worin der Guanidin-Stabilisator 1,6-Hexamethylen-bis-dicyandiamid ist.

**Revendications**

1. Composition d'élastomère thermoplastique consistant essentiellement en:

a) élastomère de copolyester thermoplastique segmenté consistant essentiellement en une multitude d'unités ester à longue chaîne et d'unités esters à courte chaîne agencées de manière périodique tête contre queue par des liaisons esters, ces unités à longue chaîne étant représentées par la formule

$$-OGO-\overset{O}{\overset{\|}{C}}R\overset{O}{\overset{\|}{C}}- \qquad \text{Formule I}$$

et ces unités à courte chaîne étant représentées par la formule

$$-ODO-\overset{O}{\overset{\|}{C}}R\overset{O}{\overset{\|}{C}}- \qquad \text{Formule II}$$

dans lesquelles G est un radical divalent restant après élimination des groupes hydroxyles terminaux d'un polyéther glycol difonctionnel ayant un poids moléculaire moyen en nombre compris dans la gamme de 400 à 6.000, R est un radical d'hydrocarbure restant après élimination des groupes carboxyles de l'acide téréphthalique ou de l'acide isophthalique, et D est un radical divalent restant après élimination des groupes hydroxyles du 1,4-butanediol ou du 1,4-butènediol; avec la condition que la quantité des unités à courte chaîne soit comprise entre 30% et 85% en poids du copolyester; et

b) polyvinylpyrrolidone en quantité comprise entre 0,1 et 25% en poids du copolyester.

2. Elastomère suivant la revendication 1, dans lequel entre 10% et 40% des groupes D représentent des radicaux divalents restant après élimination des groupes hydroxyles du 1,4-butènediol.

3. Composition d'élastomère suivant n'importe laquelle des revendications 1 ou 2, qui comprend également un stabilisant guanidine ou cyanoguanidine de formule générale III en quantité comprise entre 0,05 et 5% en poids du copolyester

$$\underset{CN}{\underset{|}{NH}}-\overset{NH}{\overset{\|}{C}}-NH\!\left(CH_2\right)_n\!NH-\overset{NH}{\overset{\|}{C}}-\underset{CN}{\underset{|}{NH}} \qquad \text{III}$$

dans laquelle n est un nombre entier compris entre 2 et 20.

4. Composition d'élastomère suivant la revendication 3, dans laquelle le stabilisant guanidine est la cyanoguanidine.

5. Composition d'élastomère suivant n'importe laquelle des revendications 1 à 4, qui comprend aussi:

a) un dérivé de diphénylamine de formule générale IV en quantité comprise entre 0,1 et 5% en poids du copolyester

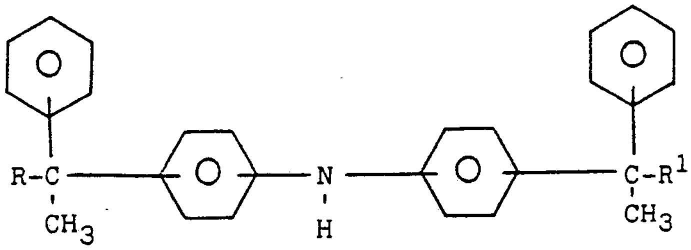

IV

dans laquelle R et $R^1$ sont méthyle ou phényle; et

b) un composé de phosphore suivant une ou plusieurs des formules V à VII, en quantité comprise entre 0,05 et 3% en poids du copolyester

i) 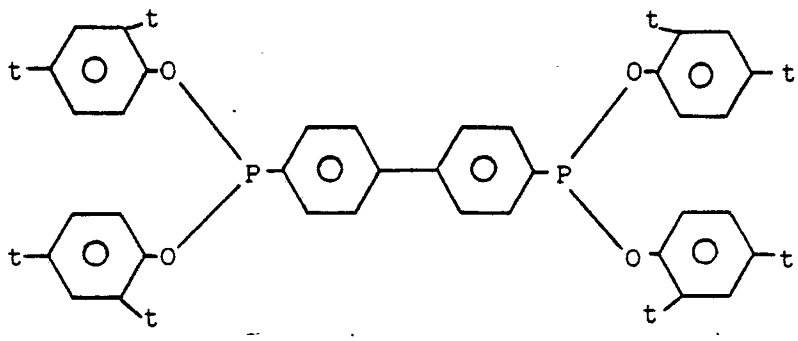 V

dans laquelle t représente un radical butyle tertiaire,

ii) 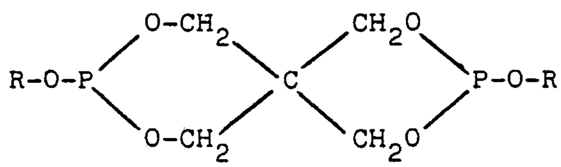 VI

dans laquelle R représente un radical alkyle ayant de 6 à 22 atomes de carbone ou un radical d'hydrocarbure de structure

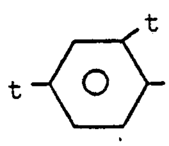

dans laquelle t représente un radical butyle tertiaire ou

iii) 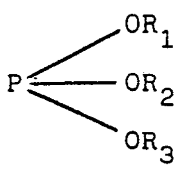 VII

dans laquelle chacun des R et $R_1$, indépendamment, représente un radical d'hydrocarbure choisi parmi le groupe consistant en radicaux hydrocarbonés alkyles, aryles et alkyles/aryles ayant de 1 à 22 atomes de carbone et $R_3$ représente l'hydrogène ou un radical d'hydrocarbure choisi parmi le groupe consistant en radicaux hydrocarbonés alkyles, aryles et alkyles/aryles ayant de 1 à 22 atomes de carbone.

6. Elastomère suivant n'importe laquelle des revendications 1 ou 3—5 dans lequel les groupes D représentent des radicaux divalents restant après élimination des groupes hydroxyles du 1,4-butanediol.

7. Composition d'élastomère suivant n'importe laquelle des revendications 1—6 dans laquelle G est un radical divalent restant après élimination des groupes hydroxy terminaux du polyéther glycol difonctionnel ayant un rapport du carbone à l'oxygène compris entre 2,5 et 4,3 à 1.

8. Composition d'élastomère suivant n'importe laquelle des revendications 1—7 dans laquelle au moins 80% des groupes R des formules I et II sont des radicaux d'hydrocarbure restant après élimination des groupes carboxyles de l'acide téréphthalique.

9. Composition d'élastomère suivant n'importe laquelle des revendications 1—8 dans laquelle la quantité des unités à chaîne courte est comprise entre 40 et 65% en poids du copolyester.

10. Composition d'élastomère suivant n'importe laquelle des revendications 1—9 dans laquelle entre 20 et 30% des groupes D représentent des radicaux divalents restant après élimination des groupes hydroxyles du 1,4-butènediol.

11. Composition d'élastomère suivant n'importe laquelle des revendications 1—10 dans laquelle G est un radical divalent restant après élimination des groupes hydroxy terminaux du poly(tétra-méthylène oxyde) glycol.

12. Composition d'élastomère suivant n'importe laquelle des revendications 1—11 qui comprend aussi, en quantité comprise entre 0,1% et 5% en poids, du copolyester, du triester d'acide 3,5-di-tert-butyl-4-hydroxyhydrocinnamique avec la 1,3,5-tris-(2-hydroxyéthyl)-s-triazine-2,4,6-(1H, 3H, 5H) trione.

13. Composition d'élastomère suivant n'importe laquelle des revendications 1—12 dans laquelle une polyvinylpyrrolidone est présente en une quantité comprise entre 0,5 et 15% en poids sur base du copolyester.

14. Composition d'élastomère suivant n'importe laquelle des revendications 1—13 dans laquelle le stabilisant guanidine est le 1,6 hexaméthylène-bis-dicyandiamide.